# EUROPÄISCHE PATENTSCHRIFT

(11) **EP 0 763 687 B1**
(45) Veröffentlichungstag und Bekanntmachung des Hinweises auf die Patenterteilung: **17.01.2001**
(21) Anmeldenummer: 96202580.5
(22) Anmeldetag: 18.09.1996
(51) Int. Cl.: F16L 19/02

(54) **Gewindekupplung**
Threaded coupling
Accouplement fileté

(30) Priorität: 18.09.1995 NL 1001225
(43) Veröffentlichungstag der Anmeldung: 19.03.1997
(73) Patentinhaber: Siersema Komponenten Service B.V., 5221 EC 's-Hertogenbosch (NL)
(72) Erfinder: Uijttewaal, Antonius Hendrikus Jacobus Maria, 5161 HL Sprang-Capelle (NL); Van den Hurk, Hendricus Petrus Alphonses Maria, 5275 JP Den Dungen (NL)
(74) Vertreter: Reynvaan, Lambertus Johannes

(56) Entgegenhaltungen:
- AU-B- 3 842 878
- DE-A- 3 126 755
- DE-U- 8 610 109
- DE-U- 29 501 054
- FR-A- 1 373 072
- FR-A- 2 642 138
- US-A- 2 780 483
- US-A- 4 861 076

## Beschreibung

Die Erfindung bezieht sich auf eine Gewindekupplung nach dem Oberbegriff des Anspruchs 1, die insbesondere zur Anwendung in der pharmazeutischen und/oder Nahrungsmittelindustrie geeignet ist. Obgleich nicht darauf beschrankt, stellt die Erfindung tatsächlich eine Verbesserung der allgemein bekannten Kupplung nach DIN 11851 dar.

Eine Kupplung dieser Art ist zum Beispiel in der deutschen Patentschrift 42 01 535 erwähnt. Bei dieser bekannten Kupplung sind die Stirnflächen der Flansche der beiden Rohrteile mit axialen und radialen Anschlagflächen versehen, so daß die Flansche fest ineinander greifen können, wobei ein Hohlraum für das Einklemmen des Dichtungsringes freigelassen wird. Der Hohlraum besteht aus einer ringförmigen Kammer, die mittels eines schmaleren radialen, ringförmigen Schlitzes mit dem inneren Durchgang der beiden Rohrteile der Kupplung in Verbindung steht. Dieser Dichtungsring besteht dabei aus einem Körperteil, das in der genannten Kammer aufgenommen werden kann, und aus einer davon radial nach innen verlaufenden Lippe, die mit einer vorher bestimmten Zusammenpressung im genannten Schlitz liegt. Die Lippe ist so dimensioniert, daß sie nach dem Zusammendrücken den Schlitz vollständig ausfüllt und dabei flach an die angrenzenden Innenwände des inneren Durchgangs der Rohrteile anschließt. Diese bekannte Kupplung hat eine Anzahl Nachteile, durch die sie nicht den hohen Anforderungen genügt, die heute an aseptische Kupplungen gestellt werden. Der erste Nachteil ist, daß eventuell nicht genau fluchtende Rohrteile schwierig miteinander verbunden werden können. Die mit enger Toleranz ineinander zu schiebenden Teile können sich leicht festklemmen, so daß es keine Sicherheit gibt, daß der Dich-tungsring in der richtigen Weise eingeklemmt wird. Ein weiterer Nachteil ist, daß das Gummi über die ganze Länge der Lippe in einer relativ großen Entfernung zusammengedrückt werden muß, wobei viel Material versetzt werden muß und die Lippe radial zum inneren Durchgang nach innen gedrückt wird. Außerdem hat das gummiähnliche Material des Dichtungsringes im allgemeinen eine fünf bis siebenmal größere Wärmeausdehnung als der sie umgebende rostfreie Stahl der Kupplung und wird bei Ausdehnung durch hohe Temperaturen bequem in den inneren Kanal der Rohrteile ausstülpen.

Aufgabe der Erfindung ist es daher, eine Gewindekupplung der eingangs genannten Art zu schaffen, bei der die obengenannten Nachteile auf einfache und zweckmäßige Weise vermieden werden und die dadurch den heutigen Anforderungen genügt, die an aseptische Kupplungen gestellt werden.

Diese Aufgabe wird erfindungsgemäß durch die Merkmale des Anspruchs 1 gelöst.

Auf diese Weise wird die Lippe des Dichtungsringes in der Nähe des freien Endes am meisten zusammengedrückt, wobei die Formgebung des Schlitzes dafür sorgt, daß die Lippe radial nach außen gedrückt wird und daher nicht die Neigung hat, außerhalb der Seitenwände der Durchgänge auszustülpen.

Die Unteransprüche 2 bis 4 geben weitere zweckmäßige Details und Ausbildungen der Erfindung wieder, wobei die Ausführungsform des Anspruchs 4 besonders günstig ist, weil bereits existierende Kupplungen nach DIN 11851 einfach angepaßt werden können, indem der bestehende Dichtungsring durch die Kombination von Zentrierring und Dichtungsring nach der vorliegenden Erfindung ersetzt wird.

Die Erfindung wird an Hand der beigefügten Zeichnungen erläutert, in denen
Figur 1 einen teilweisen Querschnitt einer Gewindekupplung in Übereinstimmung mit der Erfindung zeigt,
Figur 2 in vergrößertem Maßstab eine andere Ausführungsform der Gewindekupplung der Figur 1 zeigt.

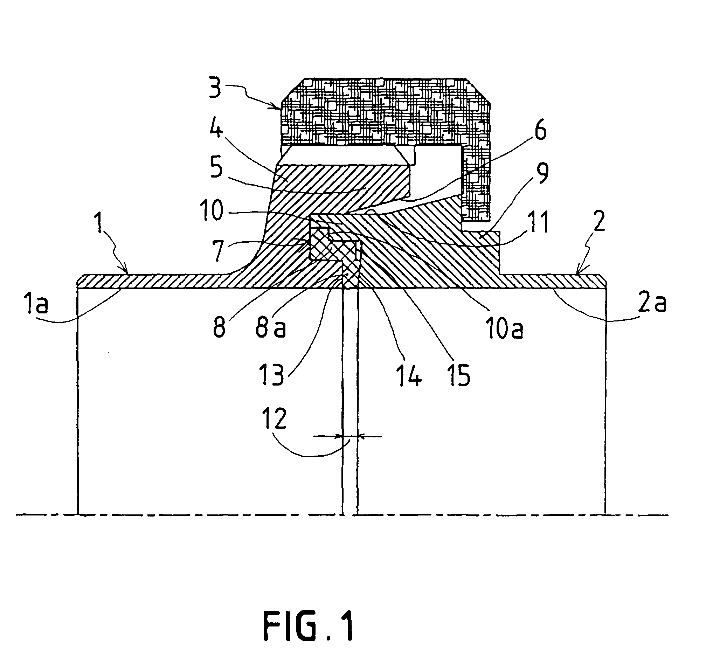

Figur 1 zeigt eine Gewindekupplung nach der Erfindung, die aus einem ersten Rohrteil 1 und einem zweiten Rohrteil 2 besteht, die mittels einer Überwurfmutter 3 miteinander verbunden sind. Die Rohrteile 1,2 haben je einen inneren axialen Durchgang mit gleichem Durchmesser, wobei die Durchgänge miteinander fluchten und durch eine Seitenwand 1a beziehungsweise 2a begrenzt sind.

Das erste Rohrteil 1 hat an einem Ende einen Umfangsflansch 4, der an der Stirnseite entlang dem Außenumfang mit einem in axialer Richtung überstehenden Rand 5 versehen ist. Dieser Rand 5 hat am Außenumfang ein Gewinde für die Befestigung der Überwurfmutter 3. Die Innenwand 6 dieses Randes 5 divergiert kegelförmig. An der Innenseite des Randes 5 ist in der Stirnfläche des Flansches 4 eine Ringnut 7 mit rechtwinkeligem Querschnitt angebracht, der an den Rand 5 grenzt, so daß die Außenwand der Ringnut 7 allmählich in die nach außen hin divergierende Innenwand 6 des Randes 5 übergeht.

Das zweite Rohrteil 2 ist am zum ersten Rohrteil 1 gerichteten Ende mit einem Flansch 9 versehen, der an der Stirnseite entlang deren Außenumfang einen axial überstehenden Rand 10 hat. Dieser Rand 10 hat eine zylindrische Außenoberfläche 11 mit einem solchen Durchmesser, daß dieser Rand 10 mit engen Toleranzen in der Ringnut 7 der Stirnfläche des Flansches 4 des ersten Rohrteiles 1 aufgenommen werden kann. Dabei liegt die Außenoberfläche 11 an der Außenwand der Ringnut 7 an, während die Stirnfläche des Randes 10 am Boden der Ringnut 7 anliegt. Auf diese Weise sind die beiden Rohrteile 1, 2 sowohl in axialer als auch in radialer Richtung in einer festen Position in bezug aufeinander fixiert. Die kegelige Fläche 6 dient dabei als sogenannter Suchrand, der das Ineinanderaufnehmen der beiden Rohrteile 1 und 2 erleichtern soll.

Wie in Figur 1 deutlich sichtbar ist, lassen die beiden gegeneinanderliegenden Rohrteile 1, 2 zwischen sich einen Raum frei, der durch die Ringnut 7 und einen sich von diesen Ringnut 7 radial nach innen ausdehnenden Schlitz 12 gebildet wird, der in offener Verbindung mit dem axialen Durchgang der beiden Rohrteile 1, 2 steht. In diesem Raum ist ein Dichtungsring 8 aufgenommen, der eine radial nach innen verlaufende Lippe 8a aufweist, die im Schlitz 12 gelegen ist, wobei das freie Ende dieser Lippe 8a flach an die Seitenwände 1a und 2a der axialen Durchgänge anschließt.

Der Schlitz 12 wird durch die innerhalb der Ringnut 7 gelegene Stirnfläche 13 des Flansches 4 einerseits und durch die innerhalb des Randes 10 gelegene Stirnfläche 14 des Flansches 9 andererseits gebildet. In der wiedergegebenen Ausführungsform steht die Fläche 13 senkrecht zur Axialrichtung der Rohrteile 1, 2, während die Fläche 14 etwas kegelig nach außen hin konvergiert. Diese Fläche 14 schließt daher mit der Fläche 13 einen Winkel von ungefähr 5° ein, so daß der Schlitz 12 radial nach innen hin etwas schmaler wird.

Der Dichtungsring 8 hat eine Z-förmige Konfiguration und dehnt sich, wie bereits gesagt, von der Ringnut 7 bis zu den Seitenwänden 1a und 2a der beiden Rohrteile 1, 2 aus. Innerhalb der Ringnut 7 wird der Dichtungsring 8 durch eine stufenförmige Verdickung 10a in der Innenwand des Randes 10 festgehalten. Die Lippe 8a des Dichtungsringes 8 wird in einem vorher bestimmten Maße zwischen den Wänden 13 und 14 zusammengedrückt. Weil die Lippe 8a eine gleichbleibende Stärke hat, wird die Lippe 8a am freien Ende am stärksten zusammengedrückt. Die kegelige Form der Fläche 14 sorgt dafür, daß die Lippe 8a nicht nur axial sondern auch radial nach außen gedrückt wird. Dadurch wird der Dichtungsring 8 nicht die Neigung haben, außerhalb der Seitenwände 1a und 2a auszustülpen. Weil das Zusammendrücken der Lippe 8a in der Hauptsache an der Stelle geschieht, wo gerade die größte Abdichtung erwünscht ist, ist nur eine relativ geringe Deformierung der Lippe 8a erforderlich, wobei eine Mindestmaterialmenge versetzt wird und wobei die Versetzung dann noch radial nach außen hin stattfindet.

Der Dichtungsring 8 ist in der Nähe des radial äußeren Teiles in der kegeligen Fläche 14 anliegenden Fläche mit einer Aussparung 15 versehen, die dazu dient, das nach außen gedrängte Material aufzunehmen.

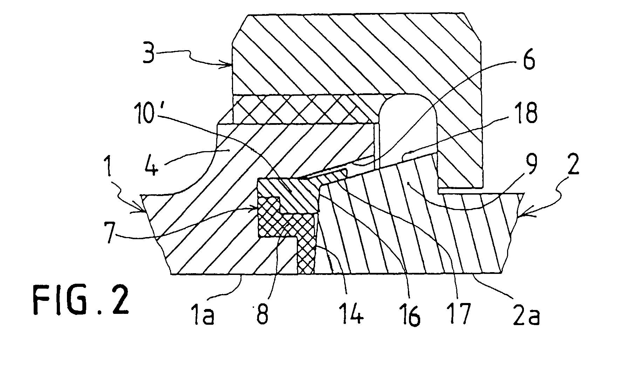

In Figur 2 ist eine Variante der Ausführungsform der Figur 1 wiedergegeben, wobei dieselben oder funktionell dieselben Teile mit denselben Bezugsziffern bezeichnet sind. In dieser Ausführungsform ist der sich axial ausdehnende Rand 10 des Flansches 9 durch einen losen Zentrierring 10' ersetzt, der in derselben Weise wie in Figur 1 in die Ringnut 7 greift und den Dichtungsring 8 darin festhält. An der zur Stirnseite des Flansches 9 zugewandten Seite hat dieser Zentrierring 10' eine kegelige axiale Anschlagfläche 16, die mit der Fläche 14 des Flansches 9 zusammenwirkt, und eine kegelige radiale Anschlagfläche 17, die mit der kegeligen Außenoberfläche 18 des Flansches 9 zusammenwirkt. Diese Ausführungsform ist so gewählt, um bereits bestehende Kupplungen nach DIN 11851 umbauen zu können. Bei diesen bestehenden Kupplungen liegt in der Ringnut 7 ein axial hinausragender Dichtungsring, wobei der Schlitz 12 einen toten Raum bildet. Indem nur dieser Dichtungsring durch die Kombination des Zentrierringes 10' mit dem dazu passenden Dichtungsring 8, 8a ersetzt wird, erhält man eine Kupplung in Übereinstimmung mit der vorliegenden Erfindung, wobei die beiden Rohrteile 1,2 in bezug aufeinander fixiert sind und es keine toten Räume gibt.

## Patentansprüche

1. Gewindekupplung, insbesondere für den Einsatz in der Nahrungsmittelindustrie, mit einem ersten Rohrteil (1) mit einem durch eine Seitenwand (1a) begrenzten Axialdurchgang, wobei das Rohrteil (1) am freien Ende einen Flansch (4) hat, der an der Stirnfläche entlang dem Rohrumfang einen axial überstehenden Rand (5) aufweist und eine an die Innenseite dieses Randes (5) grenzenden Ringnut (7) mit einem darin aufgenommenen, aus einem geeigneten gummiähnlichem Material gefertigten Dichtungsring (8) hat, und einem zweiten Rohrteil (2) mit einem durch eine Seitenwand (2a) begrenzten Axialdurchgang, wobei das Rohrteil (2) am freien Ende einen Flansch (9) hat, der mit der Stirnfläche an der Stirnfläche des Flansches (4) des ersten Rohrteiles (1) anliegt, wobei die Stirnflächen mit axialen und radialen Anschlagflächen versehen sind, um die beiden Rohrteile (1, 2) in bezug aufeinander zu fixieren, wobei die Flansche (4, 9) miteinander mittels einer Überwurfmutter (3) verbunden sind, die auf den Außenumfang des Flansches (4) geschraubt ist und den Flansch (9) hintergreift, um die beiden Flansche (4, 9) gegeneinander zu drücken, wobei der Dichtungsring (8) eingeschlossen wird und in der aneinander anliegenden Position der beiden Flansche (4, 9) ein ringförmiger Schlitz (12) vorhanden ist, der sich von der Ringnut (7) bis zu den inneren Durchgängen der beiden Rohrteile (1, 2) erstreckt, wobei der Dichtungsring (8) mit einer radialen Lippe (8a) versehen ist, die in diesem Schlitz (12) gelegen ist und in einem vorher bestimmten Ausmaß zusammengedrückt wird, um die gewünschte Abdichtung herbeizuführen, **dadurch gekennzeichnet**, daß der Schlitz (12) von der Ringnut (7) zu den inneren Durchgängen der Rohrteile (1, 2) hin allmählich schmaler wird, wobei die Lippe (8a) des Dichtungsringes (8) in unbelastetem Zustand eine gleichbleibende Stärke hat und ihr freies Ende flach an die Innenwände (la, 2a) der inneren Axialdurchgänge der Rohrteile (1, 2) anschließt, und die Innenwand (6) des Randes (5) nach innen hin konisch konvergiert und in eine axiale Außenwand der Ringnut (7) übergeht und der Flansch (9) des zweiten Rohrteiles (2) an seiner Stirnfläche entlang des Außenumfangs einen axial überstehenden Rand (10) aufweist, dessen zylindrische Außenoberfläche (11) mit enger Toleranz an der Außenwand der Ringnut (7) anliegen kann, während das freie Ende des Randes (10) am Boden des Ringnut (7) anliegt.

2. Gewindekupplung nach Anspruch 1, **dadurch gekennzeichnet**, daß der Axialrand (10) des Flansches (9) mit einer stufenförmigen Verdickung (10a) versehen ist, um den Dichtungsring (8) in der Ringnut (7) festzuhalten, und die innerhalb des Randes (10) gelegene Stirnfläche (14) des Flansches (9), die den Schlitz (12) begrenzt, von der Innenseite des Randes (10) aus kegelig konvergiert.

3. Gewindekupplung nach Anspruch 2, **dadurch gekennzeichnet**, daß die Stirnfläche (14) einen Winkel mit einer gegenüberliegenden Stirnfläche (13) des Flansches (4) einschließt, der zwischen 4 und 6° liegt.

4. Gewindekupplung nach Anspruch 1, **dadurch gekennzeichnet**, daß der Axialrand (10) des Flansches (4) ist ausgebildet als ein Zentrierring (10'), der mit dem Außenumfang an der Außenwand der Ringnut (7) und mit dem einen Ende am Boden der Ringnut (7) anliegt, wobei der Zentrierring (10') an der vom Flansch (4) abgewandten Seite eine radiale Anschlagfläche (17) und eine axiale (16) Anschlagfläche hat, die mit entsprechenden Flächen (14, 18) des Flansches (9) zusammenwirken.

## Claims

1. Threaded coupling, particularly for use in the food industry, comprising a first tubular part (1) with an axial passage delimited by a sidewall (la), the tubular part (1) having, at the free end, a flange (4) which has an axially projecting rim (5) at the front face along the tubular periphery and which has an annular groove (7) bordering on the inner side of this rim (5), and held within it, a sealing ring (8) made of a suitable rubberlike material, and comprising a second tubular part (2) with an axial passage delimited by a sidewall (2a), the second tubular part (2) having, at the free end, a flange (9) whose front face lays against the front face of flange (4) of the first tubular part (1) , the front faces being provided with axial and radial abutment faces to locate the two tubular parts (1, 2) relative to one another, the flanges (4, 9) being connected together by means of a ring nut (3) which is screwed on the outer circumference of the flange (4) and which fits behind the flange (9) in order to press the two flanges (4, 9) against each other, the sealing ring (8) being enclosed and, in the position in which the two flanges (4, 9) adhere to one another, there being an annular slit (12) which extends from the annular groove (7) to the inner passages of both tubular parts (1, 2), the sealing ring (8) being provided with a radial lip (8a) which is arranged in this slit (12) and which is compressed to a predetermined extent in order to provide the desired seal, characterised in that slit (12) becomes gradually narrower from the annular groove (7) to the inner passages of the tubular parts (1, 2), lip (8a) of the sealing ring (8) having a constant thickness in unloaded state and its free end lying flush with the inner walls (1a, 2a) of the inner axial passages of the tubular parts (1, 2), and the inside wall (6) of rim (5) converges inwardly conically and merges into an axial outer wall of the annular groove (7), and flange (9) of the second tubular part (2) has on its front face along the outer periphery an axially projecting rim (10), the cylindrical outer surface (11) of which is able to rest against the outer wall of the annular groove (7) with a tight tolerance while the free end of rim (10) rests against the bottom of annular groove (7) .

2. Threaded coupling according to claim 1, characterised in that the axial rim (10) of flange (9) is provided with a step-like thickened portion (10a) to hold the sealing ring (8) secure in the annular groove (7), and front face (14) of flange (9) which is situated within rim (10) and which delimits slit (12) converges in a conical way from the inner side of rim (10).

3. Threaded coupling according to claim 2, characterised in that front face (14) forms an angle of 4° to 6° with an opposing front face (13) of flange (4).

4. Threaded coupling according to claim 1, characterised in that axial rim (10) of flange (4) is in the form of a locating ring (10') which with the outer periphery rests against the outer wall of annular groove (7) and with the one end rests against the bottom of annular groove (7), the locating ring (10') having on the side remote from flange (4) a radial abutment face (17) and an axial abutment face (16) which co-operate with corresponding faces (14, 18) of flange (9).

## Revendications

1. Un accouplement fileté, destiné notamment à l'utilisation dans l'industrie alimentaire, comprenant une première partie tubulaire (1) qui comporte un passage axial délimité par une paroi latérale (1a), la partie tubulaire (1) ayant, à l'extrémité libre, une bride (4) qui a un bord (5) faisant saillie axialement au niveau de la face frontale le long de sa périphérie tubulaire et qui a une rainure annulaire (7) contiguë au côté intérieur de ce bord (5), ladite rainure annulaire ayant, maintenue à l'intérieur, une bague d'étanchéité (8) en matière caoutchouteuse adaptée, et comprenant une deuxième partie tubulaire (2) qui comporte un passage axial délimité par une paroi latérale (2a), la deuxième partie tubulaire (2) ayant, à l'extrémité libre, une bride (9) dont la face frontale adhère à la face frontale de la bride (4) de la première partie tubulaire (1), les faces frontales étant dotées de faces de butée axiales et radiales pour positionner les deux parties tubulaires (1, 2) l'une par rapport à l'autre, les brides (4, 9) étant connectées ensemble au moyen d'un écrou à oeil (3) qui est vissé sur la circonférence extérieure de la bride (4) et qui agrippe derrière la bride (9) afin de pousser les deux brides (4, 9) l'une contre l'autre, la bague d'étanchéité (8) étant enclose et, dans la position adjacente des deux brides (4, 9) l'une par rapport à l'autre, se trouvant une fente annulaire (12) qui s'étend de la rainure annulaire (7) aux passages intérieurs des deux parties tubulaires (1, 2), la bague d'étanchéité (8) étant dotée d'une lèvre radiale (8a) qui est située dans cette fente (12) et qui est comprimée dans une mesure prédéterminée afin de fournir l'étanchéité désirée, caractérisé en ce que la fente (12) de la rainure annulaire (7) devient progressivement plus étroite vers les passages intérieurs des parties tubulaires (1, 2), la lèvre (8a) de la bague d'étanchéité (8) ayant une épaisseur constante à l'état non chargé et son extrémité libre étant à fleur avec les parois intérieures (1a, 2a) des passages axiaux intérieurs des parties tubulaires (1, 2), et la paroi intérieure (6) du bord (5) convergeant de façon conique vers l'intérieur et fusionnant dans une paroi extérieure axiale de la rainure annulaire (7), et la bride (9) de la deuxième partie tubulaire (2) ayant à sa face frontale le long de la périphérie extérieure un bord (10) faisant saillie axialement et dont la surface extérieure cylindrique (11) peut adhérer à la paroi extérieure de la rainure annulaire (7) avec une tolérance étroite tandis que l'extrémité libre du bord (10) repose contre le fond de la rainure annulaire (7).

2. Accouplement fileté selon la revendicacion 1, caractérisé en ce que le bord axial (10) de la bride (9) est doté d'un épaississement (10a) à gradins pour maintenir la bague d'étanchéité (8) dans la rainure annulaire (7), et la face frontale (14) de la bride (9) qui est située à l'intérieur du bord (10) et qui délimite la fente (12) converge de façon conique à partir de la fare intérieure du bord (10).

3. Accouplement fileté selon la revendication 2, caractérisé en ce que la face frontale (14) forme un angle compris entre 4° et 6° avec une face frontale opposée (13) de la bride (4).

4. Accouplement fileté selon la revendication 1, caractérisé en ce que le bord axial (10) de la bride (4) se présente sous la forme d'une bague d'arrêt (10') qui adhère avec la périphérie extérieure à la paroi extérieure de la rainure annulaire (7) et qui avec l'une extrémité adhère au fond de la rainure annulaire (7), la bague d'arrêt (10') ayant sur le côté éloigné de la bride (4) une face de butée radiale (17) et une face de butée axiale (16) qui coopèrent avec des faces (14, 18) correspondantes de la bride (9).
